Europäisches Patentamt

European Patent Office

Office européen des brevets

(11) Publication number: **0 586 707 A1**

## EUROPEAN PATENT APPLICATION
### published in accordance with Art. 158(3) EPC

(21) Application number: 93904346.9

(22) Date of filing: 25.02.93

(86) International application number:
PCT/JP93/00229

(87) International publication number:
WO 93/16866 (02.09.93 93/21)

(51) Int. Cl.5: **B29C 67/14**, E01C 11/26,
E04C 5/07, E04G 9/10

(30) Priority: 27.02.92 JP 41149/92
19.03.92 JP 63276/92
27.11.92 JP 318296/92
27.11.92 JP 318297/92

(43) Date of publication of application:
16.03.94 Bulletin 94/11

(84) Designated Contracting States:
DE FR GB

(71) Applicant: SUMITOMO CHEMICAL COMPANY,
LIMITED
Kitahama 4-chome 5-33
Chuo-ku Osaka 541(JP)

(84) DE FR GB

(72) Inventor: NAKAMURA, Hiroshi 3-13-8,
Otsutominami
Tsuchiura-shi
Ibaraki 300(JP)
Inventor: YAMATSUTA, Kohji 3321-1,
Motoishige
Ishige-machi
Yuki-gun
Ibaraki 300-27(JP)

(74) Representative: VOSSIUS & PARTNER
Siebertstrasse 4
D-81675 München (DE)

(54) ELECTRIC HARDENING MATERIAL, USES OF THE SAME AND METHOD OF PRACTICALLY USING THE SAME.

(57) An electric hardening material consisting of carbon fiber impregnated with an unhardened thermosetting resin is provided. Preferably, a plurality of strands each of which consists of carbon fiber filaments impregnated with a thermosetting resin and twisted are put together and intertwisted or braided to form an electric hardening rope. The surface of this electric hardening rope can be covered with an electrically insulating material as necessary. The electrically insulating coating can be removably formed. Such an electric hardening rope can be wound around a drum, transported easily, and used practically as a civil engineering or building material by disposing the rope in a desired mode on a civil engineering or building site, attaching terminals of electrodes to both ends of the rope and supplying an electric current to the rope so as to harden the thermosetting resin.

Fig. 1 A

FIELD OF THE INVENTION

The present invention relates to a resistance curable material which is mainly used in the construction and building fields, and its use and application method. In particular, the present invention relates to a resistance curable material comprising a carbon fiber bundle and an uncured thermosetting resin which is impregnated therein, its use and a method for applying the resistance curable material. The present invention can be applied to various members of buildings in the construction and building fields such as a concrete reinforcing rod and a cable, a heater or a concrete curing wire. A typical example of the resistance curable material is a resistance curable rope. The resistance curable material can be used for reinforcing and repairing buildings or the various members comprising said material.

DESCRIPTION OF THE BACKGROUND ART

A so-called fiber-reinforced plastic (hereinafter referred to as "FRP") composite material has been used in various industrial field including sports, leisure and aircraft, since it has better specific strength and specific stiffness than a metal material and is excellent in corrosion resistance.

In particular, FRP comprising carbon fibers as reinforcing fibers (hereinafter referred to as "CFRP") is intensively used in various fields since it has higher strength and modulus than other FRP and light weight. Among CFRP products, a CFRP rod member attracts attention in various fields, for example, a substitute for a reinforcing member of concrete (hereinafter referred to as "concrete reinforcing rod").

For the production of the CFRP rod member, in general, there is used a method comprising impregnating an uncured thermosetting resin in reinforcing carbon fibers to form a composite of carbon fibers and the resin, feeding the composite in a mold having a desired cross sectional shape by a so-called pultrusion method, heating and curing the thermosetting resin in the mold, and pulling out the cured composite from the mold.

However, the conventional methods for producing the FRP rod member including the above general method have various drawbacks that they require a large scale molding apparatus such as a heat press, an autoclave, a heating-curing furnace and a pultrusion machine so that a production spot is limited to a place where the molding apparatus is located, and that an expensive equipment should be used.

In addition, the conventional FRP rod member is limited in its shape or size. That is, when an elongate product or a large - size product is required, the production, transportation and execution on the spot of the rod member made of FRP (hereinafter referred to as "FRP rod member") are very troublesome.

For example, when the FRP rod member is used as a concrete reinforcing material (hereinafter referred to as "FRP reinforcing member"), the material produced in a factory is transported to the execution spot. But, the transportation of the elongate material is difficult and its workability is very bad. In connection with processability and applicability, the FRP rod member cannot be freely processed, for example, bent at the execution spot, which greatly limits its use.

It is well known for a long time that when an electric current is passed through a carbon fiber, Joule's heat is generated. For example, Japanese Patent Kokai Publication 58-155926 discloses a method for producing a composite molded article using the Joule's heat.

A heater using the Joule's heat is also known. As a heater material for resistance heating by the Joule's heat, an alloy is generally used. In particular, nichrome (an alloy comprising nickel and chromium) or ferrochromium (an alloy comprising iron and chromium) are used. However, it is difficult to impart these heater materials with a function as a reinforcing material, since they are heavy and has low strength. In addition, these materials are hardly used in a severe atmosphere, for example, a corrosive gas atmosphere.

SUMMARY OF THE INVENTION

The present invention intends to solve the above problems. According to a first aspect of the present invention, there is provided a resistance curable material comprising a carbon fiber bundle and an uncured thermosetting resin which is impregnated in said carbon fiber bundle.

A surface of this resistance curable material may be covered by an electrical insulating material, and the covering may be detachable, if desired.

According to a second aspect of the present invention, there is provided a resistance curable rope comprising a carbon fiber bundle and an uncured thermosetting resin which is impregnated in said carbon fiber bundle.

Preferably, the carbon fiber bundle in which the uncured thermosetting resin is impregnated, is integrated together by twisting or braiding. In addition, a surface of this resistance curable rope may be covered by an electrical insulating material, and the covering may be detachable, if desired.

According to a third aspect of the present invention, there is provided a carbon fiber-reinforced resin member which is obtained by providing the resistance curable material of the present invention in a desired shape and applying an electric current therethrough to cure the thermosetting resin.

According to a fourth aspect of the present invention, there is provided a carbon fiber-reinforced resin member which is obtained by providing the resistance curable rope of the present invention in a desired shape and applying an electric current therethrough to cure the thermosetting resin.

This member can be a construction member, a building member, a concrete reinforcing material or a cable.

According to a fifth aspect of the present invention, there is provided a method for applying a carbon fiber-reinforced member comprising steps of providing the resistance curable material of the present invention in a desired shape and applying an electric current therethrough to cure the thermosetting resin.

According to a sixth aspect of the present invention, there is provided a method for applying a carbon fiber-reinforced member comprising steps of providing the resistance curable rope of the present invention in a desired shape and applying an electric current therethrough to cure the thermosetting resin.

According to a seventh aspect of the present invention, there is provided a heater comprising, as a heating unit, a carbon fiber-reinforced composite material which is obtained by providing the resistance curable material comprising a carbon fiber bundle and an uncured thermosetting resin which is impregnated in said carbon fiber bundle in a desired shape and applying an electric current therethrough to cure the thermosetting resin.

According to an eighth aspect of the present invention, there is provided a concrete curing wire comprising a carbon fiber bundle and an uncured thermosetting resin which is impregnated in said carbon fiber bundle.

According to a ninth aspect of the present invention, there is provided a method for reinforcing or repairing a construction or building member with a carbon fiber-reinforced composite, comprising steps of providing the resistance curable material comprising a carbon fiber bundle and an uncured thermosetting resin which is impregnated in said carbon fiber bundle in a desired shape at a part to be reinforced or repaired, and applying an electric current therethrough to cure the thermosetting resin.

## BRIEF DESCRIPTION OF THE DRAWINGS

Fig. 1 shows a triplet-twisted rope (Fig. 1A) which is an example of the resistance curable rope of the present invention, and its cross section (Fig. 1B).

Fig. 2 shows an octet-twisted rope (Fig. 2A) which is another examples of the resistance curable rope of the present invention, and its cross section (Fig. 2B).

Figs. 3A and 3B show respective cross sections of two examples of the resistance curable rope the surface of which is covered by the electrical insulating material.

Fig. 4 is a plain view of a thawing heater which is one application example of the carbon fiber-reinforced composite heater of the present invention and used in a thawing equipment.

In Figures, 1 stands for carbon fibers, 2 for a carbon fiber bundle (yarn) in which an uncured thermosetting resin is impregnated, 3 for carbon fiber bundles (strand) comprising twisted yarns, 4 for a rope comprising braided carbon fiber bundles in which the uncured thermosetting resin is impregnated, 5 for a covering made of an electrical insulating material over the rope, 6 for a thread for cutting the covering, 7 for a stitched part of the covering, and 8 for a thawing heater.

## DETAILED DESCRIPTION OF THE INVENTION

First, the reinforcing fiber material to be used in the present invention will be explained.

The reinforcing fiber used in the present invention is carbon fiber, and its properties and shapes are not limited. In view of a relationship between an application condition of electric current and heat generation, the carbon fiber having a volume resistivity of $10^{-4}$ to $10^{-1}$ $\Omega$.cm is preferred.

A preferred examples of the carbon fiber having such characteristics is carbon fiber having a graphite structure which is produced by calcining a polyacrylonitrile precursor or a pitch precursor.

The carbon fiber is present in the thermosetting resin as a matrix preferably in an amount of 30 to 80 % by volume, in view of the handling property of the resistance curable material, for example, the resistance curable rope, and properties of the rod member produced by the application of electric current.

In combination with the carbon fiber, other reinforcing fiber may be used. Examples of the other reinforcing fiber are inorganic and organic fibers, such as glass fiber, silicon carbide fiber, alumina fiber, titania fiber, aromatic polyamide fiber, aromatic polyester fiber, and the like. Depending on the applications, two or more kinds of fibers or fibers having different shapes may be used.

In addition to the reinforcing fiber, inorganic particles such as talc, mica or silica or metal powder such as iron powder or aluminum power may be added. If necessary, a steel wire or a copper wire may be used in combination. Further, as a heating unit, a nichrome wire may be used in combination.

A kind of the uncured thermosetting resin used in the present invention is not limited. Examples of the thermosetting resin are phenolic resin, urea resin, melamine resin, unsaturated polyester resin, vinyl ester resin, polyimide resin, bismaleimide resin, polyurethane resin, diallylphthalate resin, epoxy resin and the like. From these resins, one or more resins are used.

Among them, the epoxy resin is preferred, in view of the handling property of the resistance curable material comprising the carbon fiber bundle and the impregnated uncured thermosetting resin, for example, the resistance curable rope, and the characteristics of the molded article obtained by curing the thermosetting resin by the application of electric current through the resistance curable material. When the resistance curable material of the present invention is used as a heater at a high temperature, the phenolic resin and polyimide resin having high heat resistance are preferred. If necessary, a flame retardant resin can be used.

A kind of epoxy resin is not critical. Examples of the epoxy resin are bisphenol A epoxy resin, bisphenol AD epoxy resin, bisphenol F epoxy resin, phenol-novolak epoxy resin, cresol-novolak epoxy resin and glycidylamine epoxy resin (e.g. tetraglycidyldiaminodiphenylmethane or triglycidyl-p-aminophenol). They may be used independently or in combination of two or more of them. In addition, according to the application, a flame retardant epoxy resin containing bromine and the like can be used.

In general, the uncured thermosetting resin used in the present invention contains a curing agent. For example, when the epoxy resin is used as the uncured thermosetting resin, a known curing agent for the epoxy resin can be used.

Examples of the curing agent are aliphatic amines (e.g. ethylene diamine), aliphatic polyamines (e.g. diethylenetriamine), aromatic amines (e.g. metaphenylenediamine and diaminodiphenylsulfone), primary and tertiary amines (e.g. piperidine and diazabicycloundecane), acid anhydrides (e.g. methyltetrahydrophthalic acid anhydride), imidazole compounds and their derivatives (e.g. 2-methylimidazole and 2-ethyl-4-methylimidazole), Lewis acid salts, Brønsted acid salts, latent curing agents (e.g. dicyandiamide and amineimide), and the like. They may be used independently or in combination of two or more of them.

When a long storage life of the resistance curable material of the present invention is desired, the latent curing agent for the epoxy resin is used to achieve this purpose. Examples of such curing agent for the epoxy resin are dicyandiamide, organic acid hydrazide, amineimide, tertiary amine salts, imidazole salts, Lewis acids, Brønsted acids, and the like. To improve the properties of the matrix resin, it may be possible to add a modifier such as acrylonitrile-butadiene block copolymer having a terminal carboxyl group, if necessary.

The resistance curable material of the present invention includes the resistance curable rope which will be explained below, and a material which substantially the same function in the resistance curing as the resistance curable rope, and a flat form such as a tape-form or sheet-form material, namely a resistance curable tape and sheet. In the following descriptions, the present invention will be explained by making reference to the resistance curable rope as a typical example.

The configuration and the production method of the resistance curable rope of the present invention will be explained.

The resistance curable rope is intended to mean a rope comprising a carbon fiber bundle of plural carbon fiber filaments which may be or may not be twisted (hereinafter referred to as "strand") in which the uncured thermosetting resin is impregnated and a surface of which is covered by an electrical insulating material.

In a preferred embodiment, plural strands in which the uncured thermosetting resin is impregnated are integrated together by twisting or braiding. The resulting product is a kind of long fiber product, which is generally called rope, code, string, etc. Herein, a material comprising integrated plural strands may be called "strand" in a broad sense.

The material comprising the integrated plural strands will be further explained. It may be in the rope or wire-rope form. Plural strands may be braided in a two-dimensional form.

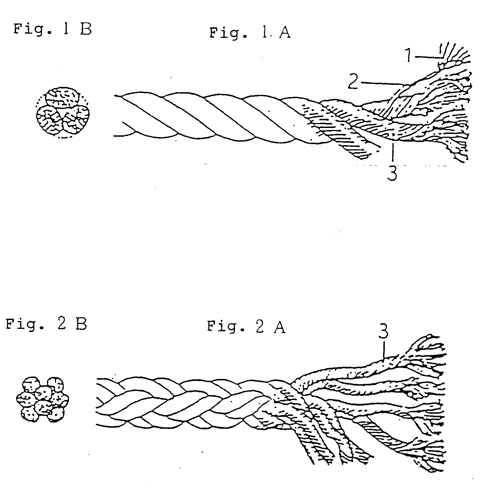

The rope includes a triplet-twisted rope (Fig. 1) consisting of three strands which are twisted in the opposite direction to the twisting direction of rope by a twisting method by which those twisted forms are not changed, a quartet-twisted rope consisting of four strands and a core rope at the center of the strands for shape retention, a random-twisted rope, a sextet-twisted rope, an octet-twisted rope (Fig. 2), "TOERU" rope, or "TAFURE" rope, braids such as an octet braid and a twelve-fold braid, a rock rope or a long line which is produced by twisting three or four ropes each of which consists of two or three twisted strands having different thickness.

The term "rope" used herein includes ropes used in industries such as construction, building, ship, mining or fishing, or wire ropes which are used in an elevator and the like. In particular, they include a strand rope consisting of plural strands each of which consists of several fiber bundles twisted round a core wire and which are twisted around a core rope, a spiral rope consisting of plural strands which are bundled in parallel to provide a desired cross sectional area and twisted. A twisting manner is not limited and may be normal Z twist, normal S twist, Lang Z twist or Lang S twist.

One comprising integrated plural carbon fiber bundles in a rope shape or a net shape may be used. A diameter of the rope is not critical. When the rope is used as the concrete reinforcing member, its diameter is preferably from about 2 mm to about 50 mm.

The surface of resistance curable material of the present invention, for example, resistance curable rope may be covered by the electrical insulating material. This covering is preferable in some applications.

When the surface is covered by the electrical insulating material, the covering of the electrical insulating material may be easily detached, if necessary.

The electrical insulating material and the resistance curable material covered thereby will be explained. The electrical insulating material herein used is intended to mean a conventional nonconductive material, and its examples are natural and synthetic resins and ceramics. They may be used in combination, if necessary in view of the handling property and characteristics of the resistance curable rope.

These materials may be used in the form of film, fiber or woven fabric according to the application or for making the covering process easy.

As the resin which is used as the covering material, in addition to the above described thermosetting resins, there may be exemplified crosslinkable resins such as UV-light curable resins and moisture curable resins, and thermoplastic resins. Specific examples of the thermoplastic resins are polypropylene, polyethylene, polystyrene, nylon-6, nylon-66, nylon-12, nylon-42, ABS resins, vinyl chloride resins, polyphenylene oxide, polybutylene terephthalate, polyethylene terephthalate, polysulfone, polyethersulfone, polyetherimide, polyarylate, and the like.

When the fibers are used as the covering material, synthetic fibers (e.g. polyamide fibers, polyester fibers, etc.), nonconductive ceramic fibers (e.g. glass fibers, alumina fibers, etc.), and natural fibers (e.g., hemp, cotton, silk, etc.) may be used. They are used independently or in combination. The woven fabric-of such fibers is also a useful covering material in the production process.

When it is not necessary to detach the covering, it is preferable to use the fiber material or woven fabric in which the thermosetting resin is impregnated as the electrical insulating material, in view of the handling property and characteristic of the resistance curable material. For example, when the resistance curable material is covered by a nonconductive fiber material or woven fabric in which the same thermosetting resin as that impregnated in the carbon fiber bundle is impregnated, the covering material can be cured at the same time as the curing of the carbon fiber reinforced resin, and the covering material is firmly bonded to the carbon fiber reinforced resin core member. This embodiment is therefore advantageous.

When the composite of the carbon fiber and the thermosetting resin is covered by the electrical insulating material, the handling property of the composite is improved, and the covering is useful for preventing electric shock in the resistance curing step.

When the resistance curable rope of the present invention is used as the concrete reinforcing member in the construction and building, the covering is made so that the surface unevenness of the twisted composite in the rope or wire-rope form remains on the surface of covering layer, or the surface of covering is made uneven or particles are adhered to the surface of covering, whereby the adhesion of the covering to the concrete is attained.

The covering can be formed by any of per se conventional methods. For example, the covering can be formed by a so-called electric wire coating method comprising immersing the carbon fiber bundles in which the thermosetting resin is impregnated or the braid thereof in a melt of the thermoplastic resin, or by winding or braiding the nonconductive fibers around the composite of the carbon fibers and the thermosetting resins. In the case of woven fabric, it can be wound around the composite in a ribbon form.

When the covering should be detached, to prevent the bonding of the covering- to the CFRP rod and maintain easy- detachability of the covering after resistance curing, a material which is hardly bonded to the thermosetting resin impregnated in the carbon fiber bundles is selected, or a releasing agent is coated on the covering material.

The covering made of easily detachable electrical insulating material herein used means that the covering is detached in situ using a conventional tool. While the formation method and shape of the covering are not limited, the following method may be exemplified:

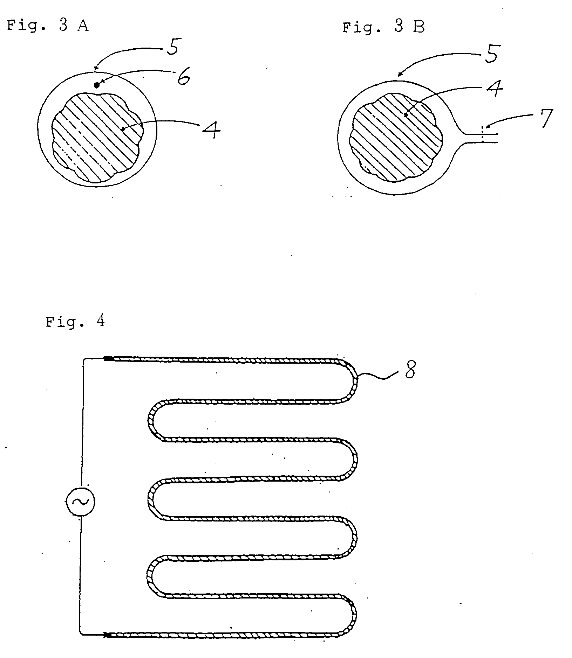

For example, as shown in Fig. 3A, in a thermoplastic resin tube, the composite of the carbon fibers and the uncured thermosetting resin is inserted together with a nonconductive strong thread which extends along the length of composite. In this embodiment, after resistance curing, the covered resin tube is cut using the thread and removed from the composite.

Alternatively, a ribbon form electrical insulating material such as a resin film or a fabric having a wider width than the periphery of the resistance curable rope is folded to wrap the composite of the carbon fibers and the thermosetting resin with aligning the length direction of the ribbon form material with that of the composite, and overlapped edges of the film are stitched or bonded as shown in Fig. 3B.

The resistance curable rope covered by the detachable insulating covering is placed in a desired shape in execution, and the covering is detached after resistance curing, whereby the cured rope has the same properties as a conventionally used CFRP rod. Since the insulating covering is present, the impregnated uncured thermosetting resin does not adhere to a foreign material during handling, and the electrical shock during resistance curing is prevented.

When the resistance curable rope of the present invention is used as the concrete reinforcing member in the construction and building, the reinforcing member preferably has unevenness on its surface to secure the adhesion of the member to the concrete. When no covering of the electrically insulating material is provided or when the detachable insulating covering is used, the material is processed so that the CFRP rod has unevenness on its surface.

When the covering is provided, the unevenness is formed on the rope-form composite of the carbon fibers and the uncured thermosetting resin, and the inner diameter of the covering is made larger than the outer diameter of the rope-form composite (including the uneven part) so that the unevenness is not damaged.

In the resistance curing method according to the present invention, the resistance curable rope comprising the carbon fiber bundles and the uncured thermosetting resin impregnated therein is placed in a desired shape, and then, when the covering of the electrical insulating material is present, the insulating material is removed from cured parts to which electrodes are attached, the electrodes are attached, and the thermosetting resin is cured by applying the electric current with adjusting a temperature of the resistance curable rope by controlling an electric energy to be supplied.

The resistance curable material or resistance curable rope to both ends of which the electrodes are attached is practical and preferable, since it can be carried as such, and executed by connecting the electrodes to an electric source in situ.

As the electric source, an alternative or direct current source may be used. The alternating current source is preferred in view of the workability when the industrial or domestic electric source is used, or an electric current applying apparatus.

When the electrode terminals are attached to the resistance curable rope, it is desirable that the electric current is uniformly applied to each filament of the carbon fibers which constitute the rope so that the whole rope is uniformly heated, in view of the characteristics of the CFRP rod member after the resistance curing. To this end, it is preferable that the carbon fiber filaments are contacted each other by pressing the terminals during attaching the electrodes to the rope. To achieve this, a content of the carbon fibers in the parts to which the electrode terminals are attached is preferably at least 80 % by volume, more preferably at least 85 % by volume, when the terminals are press bonded. To uniformly apply the electric current to each filament, it is useful to impregnate conductive metal powder in the rope together with the thermosetting resin.

Application of tension on the rope during the resistance curing improves the impregnation of the uncured thermosetting resin and the tension is applied on the fibers which constitute the composite, so that the CFRP rod member having good properties is obtained.

Herein, the carbon fiber reinforced resin member is intended to mean a product obtained by resistance curing the resistance curable rope of the present invention, which is used as a part of a structure or an equipment. For example, it may be a member which forms a part of a building or structure in the construction or building field or an equipment, in other words, a component.

Concrete examples are construction and building parts which are used in a bridge, a road or a building. The present invention is not limited to these examples.

More concrete examples of the construction and building parts are a concrete reinforcing rod or a cable which is used as a substitute for a steel cable. Herein, the cable is not limited by its shape or size and includes a string, a cord and a rope.

The resistance curable rope of the present invention is placed in a desired shape on site and executed in the form of an elongate larger construction or building member by resistance curing.

The resistance curable material of the present invention such as the resistance curable rope can be used as a heater. That is, the resistance curable rope is placed in a desired shape and the thermosetting resin is cured by the application of electric current to form a heater made of the carbon fiber reinforced composite material.

When the safety in the processing or the outdoor working is taken into account, or when the application atmosphere of the heater is exposed to water such as rain or the man or other living body touches the heater and may suffer from electric shock, preferably a part of or the whole surface of the heater is covered by the electrical insulating material.

Since the carbon fiber bundles which function as a heating unit in the heater of the present invention are firmly bound by the resin, the properties of the heater are more stable and the strength is better than a heater comprising only the carbon fibers, whereby the heater can be used as a reinforcing member. Due to availability of the heater as the reinforcing member, the heater of the present invention is expected to have wide variety of applications in the construction and building fields. One example of the application of the heater of the present invention is a thawing heater for the road and the like.

The production of the heater of the present invention will be explained.

The resistance curable rope 8 of the present invention is placed at a site where the heater should be provided in a shape, for example, as shown in Fig. 4. In this case, the rope is temporarily attached to the site with the electric insulating material or placed along a frame made of the electrical insulating material. Thereafter, the electrodes are attached to the both ends and optionally to a middle part of the rope, and the electric current is uniformly applied through the resistance curable rope to cure the thermosetting resin with adjusting the temperature of the rope by controlling an electric energy to be supplied.

The resistance curable material, for example, the resistance curable rope can be used as a concrete curing wire. In some cases, the concrete is heated and cured to increase its strength and accelerate the curing. Usually, a metal wire such as a nichrome wire is used as a curing wire in the heating curing. As a substitute for the metal wire such as the nichrome wire, the resistance curable rope of the present invention or its cured product can be used. Since the uncured resistance curable rope of the present invention has freedom in selecting its shape or size, it is suitably used as the concrete curing wire. Further, the resistance curable rope used in curing of concrete can be used as the reinforcing member.

The resistance curable material of the present invention can be used for reinforcing or repairing a structure of construction and building or its member. Herein, reinforcing or repairing is intended to mean that the structure or its member is reinforced or repaired by placing the resistance curable material, for example, the resistance curable rope at a part of the structure or its member to be reinforced or repaired, and applying the electric current to the resistance curable material to cure the thermoplastic resin.

The specific method will be explained by the following examples.

Example 1

As carbon fiber bundles, Magnamite™ AS4-12kf (manufactured by Sumika Hercules) having a modulus of 24 ton/mm$^2$, a strength of 390 kg/mm$^2$ and a number of filaments of 12,000 was used.

As a thermosetting resin to be impregnated, there was used an epoxy resin composition prepared by mixing 100 parts by weight of Sumiepoxy™ ELA 128 (diglycidyl ether of bisphenol A manufactured by Sumitomo Chemical Co., Ltd.), 7 parts by weight of dicyanediamide (manufactured by Tokyo Chemical Industries, Ltd.) and 2 parts by weight of Curesol™ 2MZ-AZINE (2,4-diamino-6-(2-methylimidazole)-ethyl-S-triazine manufactured by Shikoku Chemical Industries, Ltd.) and kneading the mixture with a three-roll mixer.

The carbon fiber bundle (yarn) was impregnated with the epoxy resin composition by drawing the carbon fiber bundle in the warmed epoxy resin composition and squeezing the bundle with a metal rod. Thereafter, the bundle was passed through a gap between a pair of metal rods a gap distance between which was adjustable to remove the excessive resin composition. An impregnated amount of the epoxy resin composition in the carbon fiber bundle was adjusted by controlling the resin temperature, the drawing rate and the gap distance between the pair of metal rods.

By the above method, 75 bobbins each carrying about 100 m of a composite of the carbon fiber bundle (yarn) and the thermosetting epoxy resin composition impregnated therein were produced. The content of the epoxy resin composition in the composite was 30 % by weight in each of the bobbins.

Using 25 bobbins carrying the wound carbon fiber bundle in which the epoxy resin was impregnated, the composites were unwound from the bobbins and bundled and twisted at 10 turns/m to obtain a strand of 100 m, which was used as a strand for a rope. Three strands each having a length of 100 m were produced. The three strands were twisted in a direction opposite to the twisting direction of the strand to produce a triple-twisted rope having a length of about 100 m, which was wound on a drum. The number of turns of the rope was 10 turns/m. By the above steps, there was obtained a resistance curable rope of the present invention which was wound on the drum and consisted of the composite of the carbon fiber bundles in which the uncured thermosetting resin was impregnated.

Thereafter, a length of 1 m was cut out from the resistance curable rope unwound from the drum, and copper electrodes were crimped to the respective ends of the rope. While applying a tension of 5 kg on the rope, the electrodes were connected to the alternating current source and a voltage of 10 V was applied on the rope. Thereby, a current of 18 A was passed through the rope and the resistance curable rope was heated up to 150°C. In this step, the temperature profile in the longitudinal direction of the rope was substantially uniform. Under such conditions, the rope was kept standing for 30 minutes to cure the thermosetting epoxy resin, whereby a CFRP rod having a diameter of about 10 mm was obtained.

The properties of the above produced CFRP rod were evaluated. From the rod, a rectangular specimen was cut out, and a temperature dependency of its viscoelasticity was measured. A temperature at which a loss elastic modulus had a peak was about 140°C, which indicated that the rope had good heat resistance. As a measuring apparatus, RSA-II manufactured by Rheometrics Inc. was used, and the heating rate was 5°C/min.

Tensile properties of the CFRP rod having the diameter of 10 mm were measured. A breaking load was 11.5 ton, and a modulus was 12 ton/mm$^2$. A tensile strengths of the rod calculated from the breaking load was 146 kg/mm$^2$. These results indicated that the rope had good mechanical properties.

Example 2

Using the resistance curable rope produced in Example 1, the application of the rope as the concrete reinforcing member was investigated. A weight of the resistance curable rope of about 100 m was about 10 kg. This rope was easily wound on a drum having a diameter of 50 cm and easily carried.

When the resistance curable rope was kept standing at room temperature for 3 months, flexibility of the rope was substantially the same as that of the rope just after the production. Through the rope which had been kept standing for three months, the electric current was passed under the same conditions as those in Example 1 to produce a CFRP rod. The produced rod had the same properties as those of the rod produced in Example 1. These results indicated that the resistance curable rope could be stored and shelved for a long time.

As an experiment, the resistance curable rope wound on the drum was transported to a construction site and used as the concrete reinforcing member. The resistance curable rope was unwound from the drum and placed in a rectangular spiral form. The length of the used resistance curable rope was 10 m. To the both ends of the placed resistance curable rope, the respective electrodes were crimped, and a voltage of 100 V was applied to the rope using the alternating current source to heat the resistance curable rope up to about 150°C. In this step, the temperature profile in the longitudinal direction of the rope was substantially uniform. The rope was kept standing under the above conditions for 30 minutes to cure the impregnated epoxy resin composition and obtain the CFRP concrete reinforcing member.

From the above steps, it was understood that the resistance curable rope of the present invention has good shelf stability, transportability and workability when it is used for the production of the concrete reinforcing member in the construction or building.

With the CFRP rod produced in Example 1, an adhesion strength to the concrete was measured. The measurement was carried out according to the method described in "Concrete Engineering" (KONKURITO KOGAKU), Vol. 23, No. 3 (1985), page 10.

The details of this test method will be explained.

1. Test specimen
    1.1 The test specimen is a cubic specimen having a size shown in Table 1. When a reinforcing iron rod having a size not shown in Table 1 is used, the side length of the specimen is 6 times a nominal diameter of the reinforcing iron rod (hereinafter referred to as "iron rod diameter").

Table 1

| (sizes of test specimens) | | | |
|---|---|---|---|
| Name of iron rod | Length of one side of the specimen (B) (cm) | Adhered length (4D) (cm) | Non-adhered length (cm) |
| D16 | 10 | 6.4 | 3.6 |
| D25 | 15 | 10.2 | 4.8 |
| D32 | 20 | 12.7 | 7.3 |
| D41 | 25 | 16.5 | 8.5 |
| D51 | 30 | 20.3 | 9.7 |

1.2 For an adhered area between the iron rod and the concrete, a part of the iron rod having no specific rolling mark such as a character is used. Free ends are provided, and each free end has a length of 4 times the diameter of iron rod.

1.3 An extending length of the iron rod on a load applying side is about 5 mm, and an edge face to which a dial gauge is contacted is finished to have a smooth face vertical to the axis of iron rod.

1.4 The number of test specimens is three.

1.5 At the same time as the production of drawing test specimen, a test specimen for compression strength test is produced according to JIS A 1132 (Production method of a concrete test specimen for the strength test).

2. Frame

2.1 A frame is made of a metal, and a size error is less than 1/100 of each side length. A flatness[1] of a side panel which contacts to the loading face of the test specimen is less than 0.02 mm.

2.2. In a side panel which contacts to the loading face of the test specimen, an opening through which the iron rod is inserted is formed, and in an opposite panel, an indent for supporting the iron rod is provided.

2.3 The frame is assembled by applying an amount of an oil sand or a hard grease thinly at joints to prevent water leakage. On inner surfaces of the frame, a mineral oil is coated before concrete placing.

3. Quality of concrete

The maximum size of coarse aggregates is 20 mm or 25 mm. A slump is 10±2 cm, and a compression strength after 28 days is 300±30 kgf/cm$^2$ (29.4±2.9 N/mm$^2$).

4.1 Concrete placing

4.1 The surface of adhered part of iron rod is cleaned to remove rusts, oils, or dirts.

4.2 On a determined length of the iron rod, a suitable treatment[2] is given to prevent the adhesion of iron rod to the concrete, and the iron rod is horizontally placed[3] in the frame with placing the iron rod vertical to the loading face.

4.3 A gap around the iron rod inserted in the opening is filled with, for example, the oil putty to prevent water leakage.

4.4 when the concrete is placed in the frame, the frame should be positioned on a horizontal place from the concrete placing to the removal of frame.

4.5 A thickness of one layer of concrete is 10 cm or less, and the concrete is placed portionwise with each layer having substantially the same thickness. Each layer of concrete is filled symmetrically about the axis of frame.

Note (1): The flatness herein used is expressed by a distance between two planes one of which passes the highest part of the flat face and the other of which passes the lowest part of the flat face.

Notes (2): For example, the iron rod is coated with a soft polyvinyl resin tube having an inner diameter which is substantially the same as the outer diameter of the iron rod and an oil putty, or the like. The outer diameter of the coated part is 1.2 to 1.5 times the diameter of the iron rod.

(3): The standard is that a rib is positioned in a horizontal plane including the axis of iron rod.

4.6 When the concrete is compacted with a tamping rod[4], the upper surface of concrete is leveled by the tamping rod for one time per about 7 cm$^2$.

After compacting each layer, if necessary, the spacing is carried out along the planes of the frame, and the side walls of the frame are tapped to vanish holes formed by the compacting rod.

4.7 When the concrete is compacted with an internal vibrator[5], a vibrator is inserted in the concrete one time per about 60 cm$^2$ of the concrete surface without avoiding touching of the vibrator to the iron rod. When the upper layer is compacted, the vibrator is inserted to a depth of about 3 cm of the lower layer. The uppermost layer of concrete should not be placed till the mortar overflows when the vibrator is inserted.

The vibrator is slowly removed so that no hole remains in the concrete. After the concrete is sufficiently compacted, the spacing is carried out according to 4.6, and the side walls of frame are tapped.

4.8 After concrete placing, an excess amount of concrete over the upper surface is scraped off to finish the surface substantially flat. After about 2 hours, the surface is refinished to obtain the test specimen having the correct determined sizes.

5. Removal of frame and curing

After 2 days, the frame is removed[6]. Thereafter, the concrete specimen is cured in water at 20±3°C.

6. Test procedures

6.1 A tensile tester is defined in JIS B 7721 (Tensile tester).

6.2 The test specimen is placed on a loading plate properly. Below the loading plate, a spherical sheet is placed to prevent the application of eccentric loading on the test specimen.

6.3 A diameter of a hole in the loading plate is 2 times the diameter of iron rod, in principle.

6.4 The load is applied at a substantially constant rate so that no shock is given to the test specimen. The loading rate is controlled so that a tensile stress rate is 500 kgf/cm$^2$ (49.0 N/mm$^2$) or less per one minute.

6.5 A dial gauge attached to the free end of iron rod is defined by JIS B 7509 (0.01 mm scaled dial gauge).

6.6 According to Table 2, a load corresponding to each slide distance is read.

Table 2

| Range of slide distance of free end | Measuring interval |
|---|---|
| Less than 0.1 mm | Each 0.01 mm |
| From 0.1 mm to less than 0.2 mm | Each 0.02 mm |
| From 0.2 mm to less than 0.5 mm | Each 0.05 mm |
| From 0.5 mm | Each 0.1 mm |

6.7 When the slide distance reached 0.002D, the load and the maximum load are recorded. D is a diameter of iron rod.

6.8 The test specimen is cured for 28 days before testing.

7. Calculation of results

An adhesion stress is calculated according to the following equation with three significant figures, and an adhesion stress-slide distance curve of each test specimen is drawn:

Note (4): The tamping rod consists of a steel rod having a hemispherical tip end, a diameter of 6 cm and a length of 50 cm.

Note (5): The vibrator is one defined by JIS A 8610 (Rod type concrete vibrator) having a nominal rod diameter of 27 mm.

Note (6): Care should be taken to give no shock to the iron rod.

$$\tau = \frac{P}{4\pi D^2} \times \alpha \qquad\qquad (1)$$

in which

$\tau$ : Adhesion stress (kgf/cm$^2$) [N/mm$^2$]

P: Tensile load (kgf) [N]

D: Diameter of iron rod (cm) [mm]

$\alpha$: A correction factor for the compression strength of concrete, $\alpha = 300\sigma_c$

$\sigma_c$: Compression strength of a cylindrical test specimen produced at the same time after 28 day curing (kgf/cm$^2$) [N/mm$^2$]

7.2 The adhesion stress at the slide distance of 0.002D is calculated.

7.3 The maximum adhesion stress is calculated by substituting the P in the above equation (1) with the maximum load.

7.4 The adhesion stress at the slide distance of 0.002D and the maximum adhesion stress are averaged values with three test specimens.

From the above test, the adhesion stress to the concrete was about 70 kg/cm$^2$, which means that the adhesion of the rope to the concrete is good.

From the above result, it is clear that the resistance curable rope of the present invention can provide a very useful member when it is used as a concrete reinforcing member.

Example 3

The application of the resistance curable rope produced in Example 1 as a construction or building cable was investigated.

To the both end of the resistance curable rope (50 m) which was produced in the same manner as in Example 1, electrodes were crimped. The both ends of the resistance curable rope were pulled to apply tension of 50 kg. Then, a voltage of 500 V was applied to the rope using the alternating current source and the electric current was passed through the resistance curable rope to heat it at about 150°C. In this step, the temperature profile in the longitudinal direction of the resistance curable rope was uniform. The rope was kept standing for 30 minutes under these conditions to obtain a CFRP cable having a length of 50 m.

From the above result, it is clear that the resistance curable rope of the present invention can provide a very useful substitute material for a steel cable to be used in a suspension bridge and the like.

Example 4

In the same manner as in Example 1, a strand for rope was produced. Using three strands, a triplet-twisted rope having a length of about 100 m was produced by twisting the strands in a direction opposite to the twisting direction of the strands at 10 turns/m. By the above steps, a composite comprising the carbon fiber bundles and the uncured thermosetting resin impregnated therein, which were integrated together in a rope form, was obtained.

Separately, the same epoxy resin composition as that used in the production of the above composite was impregnated in a woven fabric tape which was produced by cutting a TWARON™ (plain weave S/#500 of all aromatic polyamide fibers having a fabric weight of 183 g/m$^2$, manufactured by Nippon Aramide) to a width of 5 cm, whereby an electrical insulating covering material was obtained. A resin content was adjusted to 30 % by weight.

Thereafter, the woven fabric tape in which the epoxy resin composition was impregnated was wrapped around the rope form composite comprising the carbon fiber bundles and the impregnated epoxy resin composition to obtain a resistance curable rope covered with an electrical insulating covering of the present invention.

The produced resistance curable rope was cut to a length of 1 m, and the covering was removed from both end portions. Copper electrodes were crimped to the exposed end portions. Tension of 5 kg was applied to the rope. Then, the electrodes which were crimped to the both ends were connected to the alternating current source, and a voltage of 10 V was applied to the rope. Thereby, an electric current of 18 A was passed through the rope, and the rope form composite was heated up to 150°C. In this step, the temperature profile in the longitudinal direction of the rope was uniform. Under these conditions, the rope was kept standing for 30 minutes to cure the impregnated thermosetting epoxy resin, whereby a CFRP rod having a diameter of 10 mm was obtained.

The properties of the above produced CFRP rod were evaluated. From the rod, a rectangular specimen was cut out, and a temperature dependency of its viscoelasticity was measured. A temperature at which a loss elastic modulus had a peak was about 140°C, which indicated that the rope had good heat resistance. As a measuring apparatus, RSA-II manufactured by Rheometrics Inc. was used, and the heating rate was 5°C/min.

Tensile properties of the CFRP rod having the diameter of 10 mm were measured. A breaking load was 11.5 ton, and a modulus was 12 ton/mm$^2$. The tensile strength of the rod calculated from the breaking load was 146 kg/mm$^2$. These results indicated that the rope had good mechanical properties.

Example 5

Using the electric insulating material-covered resistance curable rope produced in Example 4, the application of the rope as the concrete reinforcing member was investigated. A weight of the resistance curable rope of about 100 m was about 11 kg. This rope was easily wound on a drum having a diameter of 50 cm and easily carried.

When the resistance curable rope was kept standing at room temperature for 3 months, flexibility of the rope was substantially the same as that of the rope just after the production. Through the rope which had been kept standing for three months, the electric current was passed under the same conditions as those in Example 4 to produce a CFRP rod. The produced rod had the same properties as those of the rod produced in Example 4. These results indicated that the resistance curable rope could be stored and shelved for a long time.

As an experiment, the resistance curable rope wound on the drum was transported to a construction site and used as the concrete reinforcing member. The resistance curable rope was unwound from the drum and placed in a rectangular spiral form. The length of the used resistance curable rope was 10 m. To the both ends of the placed resistance curable rope, the respective electrodes were crimped, and a voltage of 100 V was applied to the rope using the alternating current source to heat the resistance curable rope up to about 150°C. In this step, the temperature profile in the longitudinal direction of the rope was substantially uniform. The rope was kept standing under the above conditions for 30 minutes to cure the impregnated epoxy resin composition and obtain the CFRP concrete reinforcing member.

From the above steps, it was understood that the resistance curable rope of the present invention has good shelf stability, transportability and workability when it is used for the production of the concrete reinforcing member in the construction or building.

With the CFRP rod produced in Example 4, the adhesion strength of the rod to the concrete was evaluated in the same method as explained in Example 2. As the result, the adhesion strength to the concrete was about 70 kg/cm$^2$, and it was found that the adhesion property to the concrete was good.

From the above result, it is clear that the resistance curable rope of the present invention can provide a very useful member when it is used as a concrete reinforcing member.

Example 6

The application of the resistance curable rope produced in Example 4 as a construction or building cable was investigated.

To the both end of the resistance curable rope (50 m) which was produced in the same manner as in Example 4, electrodes were crimped. While the both ends of the resistance curable rope were pulled to apply tension of 50 kg. Then, a voltage of 500 V was applied to the rope using the alternating current source and the electric current was passed through the resistance curable rope to heat it at about 150°C. In this step, the temperature profile in the longitudinal direction of the resistance curable rope was uniform. The rope was kept standing for 30 minutes under these conditions to obtain a CFRP cable having a length of 50 m.

From the above result, it is clear that the resistance curable rope of the present invention can provide a very useful substitute material for a steel cable to be used in a suspension bridge.

Example 7

In the same manner as in Example 4, the same triplet-twisted rope having a length of about 100 m as produced in Example 4 was produced. The twisting of the rope was 10 turns/m.

On a surface of a ribbon form film of nylon-66 having a thickness of about 100 $\mu$m and a width of 5 cm, a fluorine-containing releasing agent (DAIFREE manufactured by Daikin Industries, Ltd.) was coated. The rope was wrapped by the ribbon form film with aligning both longitudinal directions and facing the surface having the releasing agent inside, and the film edges were stitched to from a tube using a cotton thread. Thereby, a resistance curable rope covered with an electrical insulating covering and having a length of about 100 m of the present invention was obtained.

The produced resistance curable rope was cut to a length of 1 m, and the covering was removed from both end portions. Copper electrodes were crimped to the exposed end portions. The electrode terminals were compressed so that the content of carbon fibers in the compressed parts was about 85 % by volume. Tension of 5 kg was applied to the rope. Then, the electrodes which were crimped to the both ends were connected to the alternating current source, and a voltage of 10 V was applied to the rope. Thereby, an electric current of 18 A was passed through the rope, and the rope form composite was heated up to 150°C. In this step, the temperature profile in the longitudinal direction of the rope was uniform. Under these conditions, the rope was kept standing for 30 minutes to cure the impregnated thermosetting epoxy resin. Thereafter, the nylon film was removed using the stitch. The film was easily removed without using any special apparatus or tool. Thereby, a CFRP rod having a diameter of 10 mm was obtained. The surface of the rod had the same unevenness as that of the triplet-twisted rope.

The properties of the above produced CFRP rod were evaluated. From the rod, a rectangular specimen was cut out, and a temperature dependency of its viscoelasticity was measured. A temperature at which a loss elastic modulus had a peak was about 140°C, which indicated that the rope had good heat resistance. As a measuring apparatus, RSA-II manufactured by Rheometrics Inc. was used, and the heating rate was 5°C/min.

Tensile properties of the CFRP rod having the diameter of 10 mm were measured. A breaking load was 11.5 ton, and a modulus was 12 ton/mm$^2$. The tensile strength of the rod calculated from the breaking load was 146 kg/mm$^2$. These results indicated that the rope had good mechanical properties.

Example 8

Using the resistance curable rope having the easily detachable electric insulating covering produced in Example 7, the application of the rope as the concrete reinforcing member was investigated. A weight of the resistance curable rope of about 100 m was about 12 kg. This rope was easily wound on a drum having a diameter of 50 cm and easily carried.

When the resistance curable rope was kept standing at room temperature for 3 months, flexibility of the rope was substantially the same as that of the rope just after the production. Through the rope which had been kept standing for three months, the electric current was passed under the same conditions as those in Example 7 to produce a CFRP rod. The produced rod had the same properties as those of the rod produced in Example 7. These results indicated that the resistance curable rope could be stored and shelved for a long time.

As an experiment, the resistance curable rope wound on the drum was transported to a construction site and used as the concrete reinforcing member. The resistance curable rope was unwound from the drum and placed in a rectangular spiral form. The length of the used resistance curable rope was 10 m. To the both ends of the placed resistance curable rope in the same manner as in Example 4, the respective electrodes were attached, and a voltage of 100 V was applied to the rope using the alternating current source to heat the resistance curable rope up to about 150°C. In this step, the temperature profile in the longitudinal direction of the rope was substantially uniform. The rope was kept standing under the above conditions for 30 minutes to cure the impregnated epoxy resin composition. Thereafter, the electrical insulating covering made of the nylon film was removed in the same manner as in Example 4 to apply the CFRP concrete reinforcing member.

From the above steps, it was understood that the resistance curable rope of the present invention has good shelf stability, transportability and workability when it is used for the production of the concrete reinforcing member in the construction or building.

With the CFRP rod produced in Example 7, the adhesion strength of the rod to the concrete was evaluated in the same method as explained in Example 5. As the result, the adhesion strength to the concrete was about 70 kg/cm$^2$, and it was found that the adhesion property to the concrete was good.

From the above result, it is clear that the resistance curable rope of the present invention can provide a very useful member when it is used as a concrete reinforcing member.

Example 9

In the same manner as in Example 4 except that, as an impregnated thermosetting resin, an epoxy resin composition prepared by mixing 100 parts by weight of Sumiepoxy™ ELA 128 (diglycidyl ether of bisphenol A manufactured by Sumitomo Chemical Co., Ltd.), 5 parts by weight of dicyanediamide (manufactured by Tokyo Chemical Industries, Ltd.) and 4 parts by weight of dichlorophenyldimethylurea (manufactured by Shikoku Chemical Industries, Ltd.) and kneading the mixture with the three roll mixer was used, a resistance curable rope covered by the electrical insulating material was produced as an intermediate product of a CFRP heater.

The intermediate product was cut to a length of 1 m, and the electrical insulating covering was removed from both end portions. Copper electrodes were crimped to the exposed end portions. Tension of 5 kg was applied to the rope. Then, the electrodes which were crimped to the both ends were connected to the alternating current source, and a voltage of 10 V was applied to the rope. Thereby, an electric current of 18 A was passed through the rope, and the rope form composite was heated up to 150°C. In this step, the temperature profile in the longitudinal direction of the rope was uniform. Under these conditions, the rope was kept standing for 30 minutes to cure the impregnated thermosetting epoxy resin, whereby a CFRP rod having a diameter of 10 mm was obtained.

The properties of the above produced CFRP rod were evaluated. From the rod, a rectangular specimen was cut out, and a temperature dependency of its viscoelasticity was measured. A temperature at which a loss elastic modulus had a peak was about 140°C, which indicated that the rope had good heat resistance. As a measuring apparatus, RSA-II manufactured by Rheometrics Inc. was used, and the heating rate was 5°C/min.

Tensile properties of the CFRP rod having the diameter of 10 mm were measured. A breaking load was 11.5 ton, and a modulus was 12 ton/mm$^2$. The tensile strength of the rod calculated from the breaking load was 146 kg/mm$^2$. These results indicated that the rope had good mechanical properties.

The properties of the CFRP rod as a heater were evaluated. The electrodes which were crimped to the both ends were connected to the alternating current source. While varying the applied voltage, the temperature generated by the rod heater was measured. The results are shown in the following Table I. From these results, it is understood that the rod had good heating characteristics.

Table I

| Voltage between terminals (V) | 4 | 6 | 8 | 10 | 12 |
|---|---|---|---|---|---|
| Heater temperature (°C) | 40 | 80 | 110 | 150 | 175 |

Then, the electric current was passed through the heater to generate heat and this condition was maintained for a long time, whereby the heater strength was measured. The results are shown in Table II. From these results, it is understood that the heater maintained its strength after the long term use.

Table II

| Heater temp. (°C) | 0 | 30 | 40 | 60 | 80 |
|---|---|---|---|---|---|
| Operating time (hrs) | 0 | 1000 | 1000 | 1000 | 1000 |
| Breaking load (ton) | 12 | 12 | 11 | 11 | 10 |

Example 10

Using the intermediate product for the CFRP heater which was produced in Example 9, a thawing heater for the load was executed.

After water repellency treatment was applied on the surface of flexible intermediate product, the product was laid on the road surface. The total executed heater length was 600 mm. To the both ends and points at 200 mm and 400 mm from the end, four copper electrode terminals were crimped and delta connected for three-phase alternating current. Thereafter, the voltage was adjusted so that an electric current of 15 A passed between the terminals. The voltage between each pair of terminals was 180 V, and the intermediate product was heated up to 150°C. These conditions were maintained for 30 minutes to cure the impreg-

14

nated epoxy resin and form the thawing heater.

The thawing heater was excellent in strength and had good corrosion resistance. When the voltage of 70 V was applied between each pair of the above delta connected terminals, the heater was heated up to 40°C.

After formation of the thawing heater, the road was paved to construct the thawing road in which the thawing heater was buried.

Example 11

In the same manner as in Example 9, a resistance curable rope covered with an electrical insulating covering of the present invention was produced, and used as a reinforcing member for a pillar. The upper ends of three ropes each having a length of about 11 m were connected to the top of pillar having a diameter of 30 cm and a height of 10 m, and the lower ends of the ropes were fixed to the ground so that the ground points formed an equilateral triangle with applying a tension of about 100 kg on each rope uniformly.

Since each rope had a light weight of about 1.2 kg per 11 meters and flexibility, its installation was easier than a conventional steel wire.

From the both ends of each rope, the electrical insulating covering was peeled off, and the electrodes were crimped. Then, using the alternating current source, a voltage of 100 V was applied to the ropes to heat the ropes up to about 140°C. In this step, the temperature profile in the longitudinal direction of each rope was uniform. These conditions were maintained for 30 minutes to cure the impregnated epoxy resin, whereby the pillar was supported and reinforced by the produced CFRP wires. From the above steps, it is seen that the reinforcing method of the present invention is excellent in transportability of the material and practical workability.

Example 12

In the same manner as in Example 9, a resistance curable rope covered with an electrical insulating covering of the present invention was produced, and used for repairing a concrete pipe.

On a cracked part of a concrete pipe having an outer diameter of 50 cm which had been locally cracked in a length of about 1 m in the longitudinal direction, a glass surface mat impregnated with a vinyl ester resin was laid up with hands and the vinyl ester resin was cured to finish the primary repairing. Over the primary repairing, the resistance curable rope was spirally wound under tension of about 10 kg at a winding pitch of 10 turns/m. The total length of the used rope was 16 m. Then, to the both ends of the rope, the copper electrode terminals were crimped. Using the alternating current source, a voltage of 160 V was applied to the rope and heated the rope up to about 150°C. These conditions were maintained for 30 minutes to cure the epoxy resin and repair the concrete pipe with the CFRP.

From the above steps, it is seen that the repairing method of the present invention is excellent in transportability of the material and practical workability.

INDUSTRIAL APPLICABILITY

Using the resistance curable rope of the present invention, a substitute for the concrete reinforcing iron rod used in the construction and building fields is easily executed in a desired shape on the construction or building site or a place near there. The resistance curable rope can be used as a substitute for a steel cable which is used in, for example, a suspension bridge and the like. The resistance curable rope of the present invention, the member obtained therefrom and the execution process thereof can be used in various fields in which the above described characteristics can be utilized.

The resistance curable rope of the present invention can be handled in the same way as the conventional ropes, and has moderate flexibility, so that it can be wound around a drum easily, and an elongate rope can be transported without difficulty. Since it is integrally produced in the rope form by twisting or braiding, the rod member after curing has adequate unevenness on its surface, and excellent adhesion properties to the concrete, when it is used as the CFRP reinforcing member.

The resistance curable material of the present invention can be used in the reinforcing or repairing method of various structures or their parts in the construction and building fields. The reinforcing or repairing method makes it possible to strong reinforcement or repair of the large size member with the carbon fiber reinforced composite in the construction site.

The heater of the present invention has a light weight, high strength and elasticity, as well as corrosion resistance. By making the best use of these properties, the heater can be used as a thawing heater which can be easily produced in a desired shape on site. The resistance curable rope of the present invention can be used as a concrete curing wire by making the use of the above properties.

**Claims**

1.  A resistance curable material comprising a carbon fiber bundle and an uncured thermosetting resin which is impregnated in said carbon fiber bundle.

2.  The resistance curable material according to claim 1, wherein a surface of said resistance, curable material is covered by an electrical insulating material.

3.  The resistance curable material according to claim 2, wherein said covering of the electrical insulating material is detachable.

4.  A resistance curable rope comprising a carbon fiber bundle and an uncured thermosetting resin which is impregnated in said carbon fiber bundle.

5.  The resistance curable rope according to claim 4, wherein said carbon fiber bundle in which said uncured thermosetting resin is impregnated is integrated together by twisting or braiding.

6.  The resistance curable rope according to claim 4, wherein a surface of said resistance curable material is covered by an electrical insulating material.

7.  The resistance curable rope according to claim 6, wherein said covering of the electrical insulating material is detachable.

8.  A carbon fiber-reinforced resin member which is obtained by providing the resistance curable material according to claim 1 in a desired shape and applying an electric current therethrough to cure the thermosetting resin.

9.  A carbon fiber-reinforced resin member which is obtained by providing the resistance curable rope according to claim 4 in a desired shape and applying an electric current therethrough to cure the thermosetting resin.

10. The carbon fiber-reinforcing member according to claim 8 or 9, which is a construction member.

11. The carbon fiber-reinforcing member according to claim 8 or 9, which is a building member.

12. The carbon fiber-reinforcing member according to claim 10 or 11, which is a concrete reinforcing material.

13. The carbon fiber-reinforcing member according to claim 10 or 11, which is a cable.

14. A method for applying a carbon fiber-reinforced resin member comprising steps of providing the resistance curable material according to claim 1 in a desired shape and applying an electric current therethrough to cure the thermosetting resin.

15. A method for applying a carbon fiber-reinforced member comprising steps of providing the resistance curable rope according to claim 4 in a desired shape and applying an electric current therethrough to cure the thermosetting resin.

16. The method according to claim 14 or 15, wherein said member is a construction member.

17. The method according to claim 14 or 15, wherein said member is a building member.

18. The method according to claim 16 or 17, wherein said member is a concrete reinforcing material.

**19.** The method according to claim 16 or 17, wherein said member is a cable.

**20.** A heater comprising, as a heating unit, a carbon fiber-reinforced composite material which is obtained by providing a resistance curable material comprising a carbon fiber bundle and an uncured thermosetting resin which is impregnated in said carbon fiber bundle in a desired shape and applying an electric current therethrough to cure the thermosetting resin.

**21.** The heater according to claim 20, wherein said resistance curable material is a resistance curable rope.

**22.** A concrete curing wire comprising a carbon fiber bundle and an uncured thermosetting resin which is impregnated in said carbon fiber bundle.

**23.** A method for reinforcing or repairing a construction or building member with a carbon fiber-reinforced composite, comprising steps of providing the resistance curable material comprising a carbon fiber bundle and an uncured thermosetting resin which is impregnated in said carbon fiber bundle in a desired shape at a part to be reinforced or repaired, and applying an electric current therethrough to cure the thermosetting resin.

**24.** The method according to claim 23, wherein said resistance curable material is a resistance curable rope.

Fig. 1 B          Fig. 1. A

Fig. 2 B          Fig. 2 A

Fig. 3 A

Fig. 3 B

Fig. 4

International application No.

PCT/JP93/00229

**A. CLASSIFICATION OF SUBJECT MATTER**

Int. Cl$^5$ B29C67/14, E01C11/26, E04C5/07, E04G9/10

According to International Patent Classification (IPC) or to both national classification and IPC

**B. FIELDS SEARCHED**

Minimum documentation searched (classification system followed by classification symbols)

Int. Cl$^5$ B29C67/14, E01C11/26, E04C5/07, E04G9/10

Documentation searched other than minimum documentation to the extent that such documents are included in the fields searched

| | |
|---|---|
| Jitsuyo Shinan Koho | 1965 – 1993 |
| Kokai Jitsuyo Shinan Koho | 1975 – 1993 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, A, 58-155926 (Mitsubishi Rayon Co., Ltd.), September 16, 1983 (16. 09. 83), Pages 1 to 5 (Family: none) | 1-24 |
| Y | JP, A, 2-150227 (Toray Industries, Inc.), June 8, 1990 (08. 06. 90), Pages 1 to 2 (Family: none) | 2-3 |
| A | JP, U, 61-43297 (Teikoku Sangyo K.K.), March 20, 1986 (20. 03. 86), Pages 1 to 4, Fig. 1 (Family: none) | 4-7 |
| A | JP, A, 2-92625 (Kobe Steel, Ltd.), April 3, 1990 (03. 04. 90), Pages 1 to 4 (Family: none) | 1-24 |

[X] Further documents are listed in the continuation of Box C.      [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| April 12, 1993 (12. 04. 93) | April 27, 1993 (27. 04. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)